# EUROPEAN PATENT SPECIFICATION

(11) **EP 2 275 284 B1**
(45) Date of publication and mention of the grant of the patent: **09.05.2012**
(21) Application number: 10165833.4
(22) Date of filing: 14.06.2010
(51) Int. Cl.: B60C 1/00, C08K 3/04, C08K 3/36, C08K 5/13, C08L 9/00, C08L 21/00

(54) **Rubber composition with moisture exposed surface containing combination of silica and specialized tackifying resin and tire with component thereof**
Kautschukzusammensetzung mit feuchtigkeitsausgesetzter Oberfläche aus einer Kombination aus Silicium und einem speziellen Klebrigmacherharz und Reifen mit dieser Komponente
Composition de caoutchouc avec la surface exposée humide contenant une combinaison de silice et résine donnant du collant spécialisée, et pneu utilisant ce composant

(30) Priority: 12.06.2009 US 483346
(43) Date of publication of application: 19.01.2011
(73) Proprietor: The Goodyear Tire & Rubber Company, Akron, OH 44316-0001 (US)
(72) Inventor: Sandstrom, Paul Harry, Cuyahoga Falls, OH 44223 (US)
(74) Representative: Kutsch, Bernd

(56) References cited:
- EP-A1- 2 033 812
- EP-A2- 2 022 823
- WO-A1-2009/155747
- JP-A- 2008 214 590
- US-A1- 2006 199 924
- US-A1- 2008 275 186

## Description

### Field of the Invention

In an uncured silica-containing rubber composition having a moisture exposed surface, the moisture exposed silica degrades necessary building tack for the rubber composition. The specialized tackifying resin counteracts and significantly reduces said reduction of building tack caused by the silica/moisture interaction. Accordingly, also a method of preparation of silica-containing uncured rubber is provided by shaping the rubber by processing under high shear, internal heat generation during extrusion or calendering to cause the rubber composition to reach an elevated temperature followed by treating the surface of the heated rubber composition with moisture to cool the processed rubber composition where the surface of the rubber composition contains the silica together with a specialized tackifying resin. The invention further relates to building an assembly of uncured rubber components of which at least one of such components is a silica-containing moisture exposed rubber composition which contains said specialized tackifying resin. Such assembly is sulfur cured in a suitable mold at an elevated temperature to form a tire with said component, particularly where said component is an atmospherically exposed tire sidewall. Said specialized tackifying resin is a reaction product of t-butyl phenol and formaldehyde or vinyl modified product of t-butyl phenol and formaldehyde to the exclusion of sorbitan monostearate.

EP-A- 2 033 812 describes a rubber composition and a tire having a component comprising such a rubber composition wherein the rubber composition comprises a combination of emulsion SBR and tackifying resins. The resin may be a vinyl monomer modified alkylphenol/formaldehyde resin.

US-A- 2008/0275186 describes a modified hydrocarbylphenol-aldehyde resin for use as tackifyer in a rubber composition. The tackifyer may comprise a modified butyl phenol-formaldehyde resin.

Further rubber compositions comprising tackifying resins are described in JP-A- 2008-214590, US-A- 2006/0199924 and WO-A- 2009/155747.

### Background of the Invention

Tire sidewalls are typically composed of carbon black reinforced rubber compositions. Often, the uncured rubber composition immediately following its mixing and processing is run through a water bath or on a conveyor while being sprayed with water to cool the rubber and retard any premature curing of the rubber while it is hot.

Often a tackifying resin comprising a reaction product of t-octyl phenol and formaldehyde is used to promote building tack for the uncured rubber composition.

However, addition of silica or precipitated silica reinforcement tends to "wet" the uncured rubber composition upon being exposed to the aforesaid cooling water after its high shear processing to shape the rubber composition by extrusion or calendering, particularly by extrusion, with an attendant internal heat generation and accompanying increase in temperature, its uncured rubber surface typically has insufficient suitable building tack even with inclusion of the tackifying resin product of t-octyl phenol and formaldehyde.

Accordingly a challenge is presented for enhancing the building tack of the surface of the silica-containing uncured rubber composition, particularly following its exposure to moisture such as, for example, by exposure to high humidity atmosphere or by direct exposure to water.

Moreover, silica, particularly precipitated silica, itself is hydrophilic in nature and therefore attracts water to typically result in a reduction in surface building tack of the uncured sidewall rubber component, particularly in a humid atmosphere or by direct application of cooling water onto an uncured sidewall rubber component in a tire manufacturing process. Such humid atmosphere, or application of cooling water, is usually applied to the uncured rubber component immediately after it is formed by, for example, a rubber extrusion process with its attendant internal heat generation.

It is an aspect of this invention to use silica, particularly precipitated silica, reinforcement in a tire sidewall component in combination with a specialized tackifying agent to substantially maintain surface building tack of the uncured tire sidewall rubber component after its exposure to moisture.

It is to be appreciated that this invention is intended to go beyond a simple reduction or substantial elimination of a surface effect of the inclusion of silica in the uncured rubber composition insofar as building tack is concerned.

Indeed, an important aspect of this invention is an inclusion of the specialized tackifying resin to substantially retain building tack for the uncured surface of the sidewall rubber composition, particularly in the presence of moisture.

While it has previously been proposed to provide an enhancement of surface building tack of moisture exposed uncured rubber composition which contains a combination of sorbitan monostearate and vinyl monomer modified alkylphenol/formaldehyde resin, as seen in US-A- 2009/0043039, it is desired herein to provide enhanced moisture exposed surface building tack of a rubber composition which is required to contain silica without the presence of sorbitan monostearate.

In the description of this invention, the term "phr" where used relates to parts by weight of an ingredient per 100 parts by weight of rubber, unless otherwise indicated.

The terms "rubber" and "elastomer" are used interchangeably unless otherwise indicated. The terms "vulcanized" and "cured" are used interchangeably unless otherwise indicated. The terms "compound" and "rubber composition" may be used interchangeably unless indicated.

The term "building tack", or "surface building tack" of the surface of an uncured rubber composition relates to surface tack present on the surface of the uncured rubber tire component which promotes adhesion between uncured rubber components when they are combined in the building of an uncured rubber tire. In this manner, the assembled uncured tire rubber components remain together prior to the curing of the tire assembly of rubber components.

### Disclosure and Practice of the Invention

The invention relates to an uncured rubber composition in accordance with claim 1, a method of shaping an uncured rubber composition in accordance with claim 7, a sulfur cured shaped rubber composition and a shaped tire component in accordance with claims 9 or 10 respectively.

Dependent claims refer to preferred embodiments of the invention.

In accordance with a preferred aspect of this invention, a moisture exposed uncured rubber composition is provided which comprises, based on 100 parts by weight rubber (phr);
(A) at least one (100 phr) diene-based elastomer,
(B) from 20 to 120, alternately 45 to 90, phr of particulate rubber reinforcement comprising a combination of rubber reinforcing carbon black and silica, preferably amorphous silica or precipitated silica, comprising:
   (1) 10 to 80, alternately from 30 to 60, phr of rubber reinforcing carbon black, and
   (2) 10 to 60, alternately from 15 to 30, phr of silica, preferably amorphous silica or precipitated silica;
      wherein said rubber composition contains a dispersion of greater than 3 phr, alternately between 3 and 10 phr, alternately 4 to 8 phr, of a tackifying resin comprising:
      (a) a vinyl monomer modified reaction product of t-butyl phenol and formaldehyde in the absence of sorbitan monostearate, or
      (b) a reaction product of t-butyl phenol and formaldehyde (other than said vinyl monomer modified reaction product of t-butyl phenol and formaldehyde), in the absence of sorbitan monostearate;
wherein at least one surface of the rubber composition contains a combination of the precipitated silica and the specialized tackifying resin.

Preferably the moisture exposed uncured rubber surface contains from 4 to 8 phr of said tackifying resin. The moisture exposed surface has a tack of at least 5 Newtons.

A preferred method of shaping a silica-containing uncured rubber composition comprises:
(A) extruding or calendering, preferably by extruding, the uncured rubber composition under high shear, internal heat generating conditions to thereby cause the temperature of the rubber composition to increase to an elevated temperature;
(B) treating the extruded or calendered uncured rubber composition at the elevated temperature with moisture to thereby cool the rubber composition;
   wherein the rubber composition contains a combination of rubber reinforcing carbon black and silica, preferably synthetic amorphous silica or precipitated silica, comprising:
   (1) 10 to 80, alternately from 30 to 60, phr of rubber reinforcing carbon black, and
   (2) 10 to 60, alternately from 15 to 30, phr of silica, preferably amorphous silica or precipitated silica;
   and a dispersion of greater than 3 phr, alternately between 3 and 10 phr, alternately 4 to 8 phr, of a tackifying resin;
   wherein the tackifying resin is a product of t-butyl phenol and formaldehyde in the absence of sorbitan mono-stearate or a vinyl modified product of t-butyl phenol and formaldehyde in the absence of sorbitan monosterarate.

A preferred method of preparing a silica-containing uncured rubber composition comprises:
(A) processing the uncured rubber composition under high shear, internal heat generating conditions (such as, for example, by extrusion and/or by mixing) to thereby cause the temperature of the rubber composition to increase to an elevated temperature;
(B) treating the heated rubber composition with moisture (such as, for example, by direct application of water or by atmospheric high humidity) to thereby cool the rubber composition;
wherein the surface of the rubber composition contains a combination of the silica and a tackifying resin;
wherein the tackifying resin is a product of t-butyl phenol and formaldehyde in the absence of sorbitan mono-stearate or a vinyl modified product of t-butyl phenol and formaldehyde in the absence of sorbitan monosterarate.

The specialized tackifying resin for this application is a resin derived from vinyl monomer modified t-butyl phenol and formaldehyde or a reaction product of t-butyl phenol and formaldehyde itself. This is distinguished from resins derived from t-butyl phenol and acetylene and distinguished from resins derived from t-octyl phenol and formaldehyde.

A significant aspect of this invention is the discovery of a beneficial use of a resin derived from vinyl monomer modified product of t-butyl phenol and formaldehyde or product of t-butyl phenol and formaldehyde, for providing surface building tack for the uncured moisture exposed silica reinforcement-containing rubber composition. Providing a suitable surface building tack is considered to be a particular challenge because of a surface tack defeating effect of moisture contact with the silica reinforcement contained in the rubber composition.

A further aspect in a practice of the invention was an observed significantly improved static/dynamic ozone resistance of a silica reinforcement-containing cured rubber surface which had been previously moisture exposed in its uncured state, and which contained the resin product of t-butyl phenol and formaldehyde or vinyl monomer modified product of t-butyl phenol and formaldehyde. Such observed effect was surprisingly unexpected and is believed to be a significant discovery.

In practice, sthe silica is typically used in combination with a silica coupler for the silica having a moiety reactive with hydroxyl groups (e.g. silanol groups) on the silica and another different moiety interactive with the diene-based elastomer(s).

In practice, the tackifying resin may have, for example herein only, a softening point in a range of from 90°C to 150°C.

In additional accordance with this invention the uncured rubber composition is provided wherein at least one surface thereof is, or has been, exposed to moisture (moisture exposed), where the surface contains the preferably precipitated silica and the tackifying resin and, further, a sulfur cured rubber composition is provided of the moisture exposed uncured rubber composition.

Accordingly, in further accordance with this invention a sulfur cured rubber composition is provided by sulfur curing said uncured rubber composition which contains the moisture exposed surface containing the silica and the tackifying resin on its surface.

In further accordance with this invention, a tire component of an uncured rubber composition, such as for example a tire rubber sidewall component, comprises the uncured rubber composition having a surface containing a combination of the silica and the tackifying resin.

In additional accordance with this invention, the uncured tire rubber component, for example a sidewall rubber component, is provided wherein at least one surface thereof which contains the silica and the tackifying resin is exposed to moisture and is therefore a moisture-exposed surface (surface having been exposed to moisture).

In additional accordance with this invention, a sulfur cured tire rubber component, for example a tire sidewall rubber component, is provided by sulfur curing the uncured rubber component having the moisture exposed surface which contains the silica and the tackifying resin on its surface.

In particular and in further accordance with this invention, the uncured tire rubber component, such as for example a tire rubber sidewall component surface, is (has been) exposed to moisture (such as by direct application of water or by atmospheric high humidity conditions) during the formative processing thereof in its uncured state, (e.g. by high shear internal heat generating processing such as, for example by an extrusion process to thereby provide a shaped uncured rubber sidewall component at an elevated temperature which needs to be immediately cooled) and its moisture exposed surface is dried.

After drying the moisture-exposed surface of the uncured rubber composition, it is considered herein that the silica, preferably precipitated silica, contains a water of absorption which tends to degrade surface building tack of the uncured rubber surface.

In additional accordance with this invention, an assembly of uncured rubber tire components is provided which contains the uncured rubber component, for example the tire sidewall rubber component, wherein the moisture-exposed uncured rubber component (e.g. sidewall rubber component, particularly a visible atmospherically exposed tire sidewall) has a surface with suitable building tack for building said uncured rubber component, for example the tire sidewall rubber component, into an assembly of uncured rubber tire components.

Further, such assembly is provided as a sulfur cured assembly.

In further accordance with this invention, a cured rubber tire is provided by curing the said assembly which contains said component, for example said sidewall component, in a suitable mold to form a cured rubber tire.

In additional accordance with this invention, such cured rubber tire (e.g. pneumatic rubber tire) is provided with said tire component, for example said tire sidewall component, having a visually observable, atmospherically exposed, outer surface comprised of said rubber composition which contains the silica and the resin on its visible outer surface.

This is considered herein to be significant in a sense of being able to promote, or provide, surface building tack for the uncured rubber component during the building of the rubber component into an assembly of tire rubber components prior to the curing step for the tire assembly.

In practice, the vinyl monomer modifier for the reaction product of t-butyl phenol and formaldehyde may comprise, for example, at least one of styrene, alphamethylstyrene, chlorostyrene, N,N-dimethylaminostyrene, aminostyrene, hydroxystrene, t-butylstyrene, carboxystyrene, divinylbenzene, vinylnaphthalene, vinyl pyridine, and mixtures thereof.

In one aspect, the vinyl monomer modification of the resin product of t-butyl phenol/formaldehyde may be accomplished, for example, by acid catalysis, where appropriate.

For the purposes of this description, the "rubber composition" and "compounded" rubber compositions refer to the respective rubber compositions which have been compounded with appropriate compounding ingredients such as, for example, carbon black, oil, stearic acid, zinc oxide, wax, antidegradants, resin(s), sulfur and accelerator(s) as well as the aforesaid precipitated silica and specialized tackifying resin.

For the practice of this invention, a combination of cis 1,4-polyisoprene rubber (which can be selected from at least one of natural and synthetic rubber) and cis 1,4-polybutadiene rubber is used, usually preferably to the exclusion of other elastomers insofar as tire sidewall applications are concerned.

Various amounts of processing aids, if used, may, for example, comprise 1 to 50 phr. Such processing aids may include, for example, aromatic, napthenic, and/or paraffinic processing oils. Typical amounts of antioxidants may comprise, for example, 1 to 5 phr. Representative antioxidants may be, for example, diphenyl-p-phenylenediamine and others, such as, for example, those disclosed in the Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 1 to 6 phr. Typical amounts of waxes, if used, may comprise, for example, 1 to 5 phr. Often microcrystalline waxes are used. Typical amounts of peptizers, if used, may comprise, for example, 0.1 to 1 phr. Typical peptizers may be, for example, pentachlorothiophenol and dibenzamidodiphenyl disulfide. For this invention, an inclusion in the rubber composition of a sorbitan monostearate is not used.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents may be used, for example, in an amount ranging from 0.5 to 4 phr.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.0 phr. In another embodiment, combinations of two or more accelerators in which the primary accelerator is generally used in the larger amounts, 0.5 to 2 phr, and a secondary accelerator which is generally used in amounts of 0.05 to 0.50 phr in order to activate and to improve the properties of the vulcanizate. In addition, delayed action accelerators may be used which are not affected by normal processing temperatures but produce satisfactory cures at ordinary vulcanization temperatures. Various types of accelerators are, for example, various amines, disulfides, guanidines, thioureas, thiazoles, thiurams, sulfenamides, dithiocarbamates and xanthates. It is usually preferred that the primary accelerator is a sulfenamide. If a second accelerator is used, the secondary accelerator may preferably be a guanidine, dithiocarbamate or thiuram compound. The presence and relative amounts of sulfur vulcanizing agent and accelerator(s) are not considered to be an aspect of this invention.

Sometimes a combination of antioxidants, antiozonants may be collectively referred to as antidegradants.

The tire can be built, shaped, molded and cured by various methods which will be readily apparent to those having skill in such art.

The invention may be better understood by reference to the following Examples in which the parts and percentages are by weight unless otherwise indicated.

### EXAMPLE I

### (Rubber Containing Carbon Black Reinforcement Without Silica)

Comparative Rubber Sample A was prepared to measure surface building tack of an uncured rubber composition which contained carbon black reinforcement, without containing silica reinforcement, together with a conventional tackifying resin in a form of a reaction product of p-octyl phenol and formaldehyde (Tackifying Resin AA).

The rubber composition contained natural rubber and cis 1,4-polybutadiene rubber.

Surface building tack of the uncured rubber composition was measured before and after moisture ageing of the uncured rubber composition.

Rubber Sample A contained 3 phr of Tackfying Resin AA.

The basic formulation for the rubber Samples for this Example is exemplified in the following Table 1 in which the parts are by weight unless otherwise indicated.

For the preparation of the Rubber Samples, in the first, or non-productive internal mixing stage, the ingredients were mixed for 4 minutes to a drop temperature of 150°C. In the second or productive mixing stage, sulfur and accelerator(s) were added and mixed for 2 minutes to a drop temperature of 110°C.

**Table 1**

| **Non-productive Mixing (NP) (4 min. to 150°C)** | |
|---|---|
| Natural rubber | 40 |
| Cis 1,4-polybutadiene rubber¹ | 60 |
| Carbon black² | 51 |
| Antidegradants³ | 4.5 |
| Rubber processing oil | 14 |
| Wax⁴ | 1 |
| Tackifier Resin AA⁵ | 3 |

| **Productive Mixing Step (PR) (to 110°C)** | |
|---|---|
| Zinc oxide | 3 |
| Sulfur and accelerators⁶ | 2.5 |

| | |
|---|---|
| ¹Cis 1,4-polybutadiene rubber as BUD® 1207 from The Goodyear Tire & Rubber Company ²N550 rubber reinforcing carbon black, an ASTM designation. ³Blend of Santoflex™ 6PPD from Flexsys and Wingstay 100® from The Goodyear Tire & Rubber Company ⁴Blend of microcrystalline and paraffinic waxes ⁵Tackifier Resin AA, a non-reactive product of t-octyl phenol and formaldehyde resin (para-tertiary octyl phenol), as SP1068 from SI Group, a generally used, common, rubber tackifying resin ⁶Sulfenamide and guanidine based sulfur cure accelerators | |

The results of original, air aged and moisture aged surface tack for the uncured rubber Samples are shown in Table 2.

**Table 2**

| **Ingredient (phr)** | **Sample** |
|---|---|
| Tackifying Resin AA (t-octyl phenol/formaldehyde) | 3 |
| Carbon black reinforcement | 51 |
| Silica reinforcement | 0 |

| **Tack Strength, Newtons (N), of uncured rubber Samples** | |
|---|---|
| Original tack, without moisture exposure | 11 |
| Air aged tack (5 days in air at 23°C) | 14.4 |
| Moisture aged tack, 40°C, 90% relative humidity exposure (one day) | 8.2 |

The Tack Strength is determined by a positive pressure tack test for interfacial tack between two uncured rubber samples by pulling apart two uncured rubber samples at ambient room temperature (e.g. 23°C) which had been pressed together with a pressure of 0.2 MPa (30 psi) for 30 seconds following which the pressure is released. The force to pull the samples apart is measured in terms of Newtons (N) force.

In Table 2 it can be seen that the air aged surface tack of the carbon black reinforcement-containing uncured rubber composition increased to 14.4 Newtons from its original surface tack of 11 Newtons when using the conventional tackifying resin derived from t-octylphenol and formaldehyde.

It can further be seen that its moisture aged surface tack of the carbon black reinforcement-containing uncured rubber composition decreased to 8.2 Newtons which is considered herein to be an acceptable surface building tack for the carbon black reinforcement-containing uncured rubber composition when using the conventional t-octylphenol/formaldehyde tackifying resin.

### EXAMPLE II

### (Rubber Containing Both Carbon Black and Silica Reinforcement)

Experimental Rubber Samples B through F were prepared to evaluate an effect of building tack for the uncured rubber compositions when providing an inclusion of precipitated silica reinforcing filler, together with carbon black, in the rubber composition using various tackifying resins before and after air ageing and high humidity "moisture" ageing. The rubber composition did not contain sorbitan monostearate.

Rubber Sample B contained Tackifier AA as a resin product of t-octyl phenol and formaldehyde.

Rubber Sample C contained Tackifier BB, a resin product of t-butyl phenol and acetylene.

Rubber Sample D contained Tackifier CC as a hydrocarbon tackifying resin.

Rubber Sample E contained Tackifier DD as a vinyl monomer modified resin product of t-butyl phenol and formaldehyde.

Rubber Sample F contained Tackifier EE as an amine modified resin product of t-octyl phenol and formaldehyde.

It is important to appreciate that:
(A) Tackifier resin DD differs significantly from Tackifier resin AA in the sense that while both tackifiers are derived from formaldehyde, only Tackifier DD is derived from the combination of t-butyl phenol and formaldehyde, namely a vinyl monomer modified product of t-butyl phenol and formaldehyde, and that
(B) Tackifier resin DD differs significantly from Tackifier resin BB in the sense that while both tackifiers are derived from t-butyl phenol, only Tackifier DD is derived from formaldehyde, namely a vinyl monomer modified product of t-butyl phenol and formaldehyde.

Tackifier resin EE differs further from Tackifier resin DD in a sense that it is an amine modified product derived from t-octyl phenol and formaldehyde.

Tackifier CC differs further from Tackifier resin DD in a sense that it is a hydrocarbon derived resin.

The basic formulation for this Example is shown in the following Table 3, using materials indicated in Table 1 in which the parts are by weight unless otherwise indicated. The Rubber Samples were prepared in the manner of Example I.

**Table 3**

| **Non-productive Mixing (NP) (4 min. to 150°C)** | |
|---|---|
| Natural rubber | 50 |
| Cis 1,4-polybutadiene rubber | 50 |
| Carbon black | 30 |
| Tackifier Resin AA, BB, CC, DD or EE⁸ | 3 |
| Rubber processing oil | 4 |
| Silica coupling agent⁹ | 5 |
| Precipitated silica¹⁰ | 30 |
| Antidegradant | 5.3 |
| Zinc oxide | 1.5 |
| Wax | 1.5 |

| **Productive Mixing Step (PR) (to 110°C)** | |
|---|---|
| Sulfur and accelerators | 2.5 |

| | |
|---|---|
| ⁸Tackifying resin AA, derived from t-octyl phenol and formaldehyde as SP1068™ from the SI Group; tackifying resin BB, derived from t-butyl phenol and acetylene as Koresin™ from BASF Ludwigshafen; tackifying resin CC, derived from petroleum hydrocarbon as Escorez 1102™ from ExxonMobil; tackifying resin DD, vinyl monomer modified resin derived from t-butyl phenol and formaldehyde as Elaztobond T2000™ from the SI Group; and tackifying resin EE, amine modified resin derived from t-octyl phenol and formaldehyde as Elaztobond T8000™ from the SI Group | |

The cure behavior and various cured physical properties for the compositions are shown in Table 4 and are provided in the manner of Example I.

**Table 4**

| | **Sample** | | | | |
|---|---|---|---|---|---|
| | **B** | **C** | **D** | **E** | **F** |
| Silica | 30 | 30 | 30 | 30 | 30 |
| Carbon black | 30 | 30 | 30 | 30 | 30 |
| Tackifying Resin AA (t-octyl phenol and formaldehyde) | 3 | 0 | 0 | 0 | 0 |
| Tackifying Resin BB (t-butyl phenol and acetylene) | 0 | 3 | 0 | 0 | 0 |
| Tackifying Resin CC (petroleum resin) | 0 | 0 | 3 | 0 | 0 |
| Tackifying Resin DD (vinyl monomer modified resin derived from t-butyl phenol and formaldehyde) | 0 | 0 | 0 | 3 | 0 |
| Tackifying Resin EE (amine modified resin from t- octyl phenol and formaldehyde) | 0 | 0 | 0 | 0 | 3 |

| **Tack Strength, N, of uncured rubber Samples** | | | | | |
|---|---|---|---|---|---|
| Original tack, without moisture exposure | 3.5 | 3.2 | 2.4 | 11 | 3.2 |
| Air aged tack (5 days in air at 23°C) | 4.9 | 3.5 | 2.5 | 6.7 | 3.9 |
| Moisture aged tack (1 day, 40°C, 90% relative humidity exposure) | 1.8 | 1.8 | 1.4 | 3.1 | 1.4 |

It can be seen from Table 4 that the only tackifer resin which provided an adequate improvement in original unaged surface tack of at least 5 Newtons for the uncured rubber combined with air aged surface tack of at least 5 Newtons for the uncured rubber was tackifying resin DD (for rubber Sample E), namely the vinyl monomer modified product of t-butyl phenol and formaldehyde.

However it is seen from Table 4 that the moisture aged surface tack for the uncured rubber Sample E (using the Tackifier resin DD) was below a desirable 5 Newtons even though it yielded a moisture aged surface tack superior to the other comparative tackifying resins AA, BB, CC and EE.

Accordingly, it is concluded herein that the inclusion of the Tackifer resin DD, the vinyl monomer modified t-butyl phenol/formaldehyde resin, provided the best of all of the original surface tack, air aged surface tack and moisture (humidity) aged surface tack for the uncured rubber at the 3 phr level, as observed for rubber Sample E in Table 4, as compared to use of resins AA, BB, CC and EE.

However, even with this beneficial comparative rubber surface tackifying result, the observed moisture (humidity) aged tack provided by Tackifier resin DD, as observed by rubber Sample E, was less than a more desirable 5 Newtons.

It is further concluded that the tackifying resins AA, BB, CC and EE, which are significantly different from Tackifying resin DD, provided less than a desirable 5 Newtons of all of the original surface tack, air aged surface tack and moisture aged surface tack for the uncured rubber Samples B, C, D and F, respectively, at the 3 phr level.

### EXAMPLE III

### (Rubber Containing Both Carbon Black and Silica Reinforcement)

Experimental Rubber Samples G through K were prepared to evaluate an effect of surface building tack for the uncured rubber compositions when providing an inclusion of precipitated silica reinforcing filler in the rubber composition, without an inclusion of sorbitan monostearate.

For this Example, the surface building tack was evaluated for original and moisture aged surface tack

For this example, an increased level of 5 phr of the tackifying resins was used.

The basic formulation is exemplified in the following Table 5, using materials indicated in Table 3 in which the parts are by weight unless otherwise indicated.

The Rubber Samples were prepared in the manner of Example I.

**Table 5**

| **First Non-productive Mixing Step (NP1) (4 min. to 150°C)** | |
|---|---|
| Natural rubber | 50 |
| Cis 1,4-polybutadiene rubber | 50 |
| Carbon black | 30 |
| Tackifier Resin AA, DD, FF, GG or EE⁹ | 5 |
| Rubber processing oil | 4 |
| Silica coupling agent | 5 |
| Precipitated silica | 30 |
| Antidegradant | 5.3 |
| Zinc oxide | 1.5 |
| Wax | 1.5 |

| **Productive Mixing Step (PR) (to 110°C)** | |
|---|---|
| Sulfur and accelerators⁵ | 2.5 |

| | |
|---|---|
| ⁹Tackifying resin AA, derived from t-octyl phenol and formaldehyde as SP1068™ from the SI Group (as in Example I); tackifying resin DD, vinyl monomer modified resin derived from t-butyl phenol and formaldehyde as Elaztobond T2000™ from the SI Group (as in Example I); tackifying resin EE, amine modified resin derived from of t-octyl phenol and formaldehyde as Elaztobond T8000™ from the SI Group (as in Example I); tackifying resin FF, derived from t-butyl phenol and formaldehyde as T3100™ from the SI Group without a vinyl monomer modification; and tackifying resin GG, derived from t-octyl phenol and formaldehyde as T6000™ from the SI Group. | |

The cure behavior and various cured physical properties for the compositions are shown in Table 6 and are provided in the manner of Example I.

**Table 6**

| | **Samples** | | | | |
|---|---|---|---|---|---|
| | **Control** | | | | |
| | **G** | **H** | **I** | **J** | **K** |
| Silica | 30 | 30 | 30 | 30 | 30 |
| Carbon black | 30 | 30 | 30 | 30 | 30 |
| Tackifying Resin AA (t-octyl phenol_and formaldehyde) | 5 | 0 | 0 | 0 | 0 |
| Tackifying Resin DD (vinyl monomer modified resin of t-butyl phenol and formaldehyde) | 0 | 5 | 0 | 0 | 0 |
| Tackifying Resin FF (product of t-butyl phenol and formaldehyde) | 0 | 0 | 5 | 0 | 0 |
| Tackifying Resin GG (t-octyl phenol and formaldehyde) | 0 | 0 | 0 | 5 | 0 |
| Tackifying Resin EE (amine modified resin of t-octyl phenol and formaldehyde) | 0 | 0 | 0 | 0 | 5 |

| **Tack Strength, N, of uncured rubber Samples** | | | | | |
|---|---|---|---|---|---|
| Original tack, without moisture exposure | 9 | 14.8 | 12.2 | 9.9 | 10.6 |

| **Moisture aged tack (40°C, 90% relative humidity)** | | | | | |
|---|---|---|---|---|---|
| 1 day | 2.7 | 9.1 | 5 | 3.7 | 5.2 |
| 5 days | 3.2 | 8.2 | 7.7 | 3.2 | 3.3 |

| **Rheometer, 50°C** | | | | | |
|---|---|---|---|---|---|
| T90, minutes | 11 | 9.6 | 12.3 | 12.1 | 12.2 |
| **Stress-strain** | | | | | |
| Tensile strength, MPa | 16.2 | 15.3 | 16.5 | 16 | 15.9 |
| Elongation at break % | 657 | 656 | 678 | 663 | 642 |
| 300% ring modulus | 6.3 | 6.1 | 6.2 | 6.2 | 6.5 |
| Rebound, (%), 100°C | 54 | 53 | 54 | 54 | 54 |
| Hardness, Shore A, 100°C | 57 | 56 | 56 | 57 | 58 |

| **Static ozone test observations of cured rubber Samples Ozone 50 pphm, 48 hours, 40°C, Variable Strain** | | | | | |
|---|---|---|---|---|---|
| Crack Density (surface containing cracks) | 2 | 1 | 1 | 2 | 2 |
| Crack Severity (size of cracks) | 3 | 2 | 1 | 2 | 2 |
| Crack Density x Severity | 6 | 2 | 1 | 4 | 4 |

| **Dynamic ozone test observations of cured rubber Samples Ozone 50 pphm, 48 hours, 40°C, 60% Strain** | | | | | |
|---|---|---|---|---|---|
| Days until Sample broke during test | 14 | 18 | 16 | 14 | 14 |

The following is used as a key to report visual observations of cracks, if any, occurring on surface of representative Samples submitted to the ozone tests:
Crack Density (average portion of the surface of the Sample which contained cracks)
   0 = none
   1 = less than ¼ of the surface
   2 = from ¼ to ½ of the surface
   3 = from ½ to ¾ of the surface
Crack Severity (average size of cracks)
   1 = small (hairline cracks)
   2 = medium
   3 = large
4 = severe (open cracks)

Crack Density times Crack Severity is considered herein as a measure of an overall ozone resistance of the rubber with a higher value being indicative of worse ozone resistance to rubber surface degradation.

It can be seen from Table 6 that the only tackifer resins which provided an acceptable combination of original unaged surface tack and moisture aged surface tack of at least 5 Newtons for the uncured silica-containing rubber were both of the tackifying resins DD and FF, namely the vinyl monomer modified resin derived from t-butyl phenol and formaldehyde and resin derived from t-butyl phenol and formaldehyde without the vinyl monomer modification which were contained in rubber Samples H and I, respectively.

Also, the significantly improved static dynamic ozone resistance of the moisture exposed, silica reinforcement-containing, rubber surface for the rubber Samples H and I which contained the tackifying resins DD and FF, respectively, was surprisingly unexpected and is considered herein as being a significant discovery.

From Table 6 it can be seen that both the vinyl monomer modified resin product of t-butyl phenol/formaldehyde (resin Tackifier DD of Sample H) and the resin product of t-butyl phenol/formaldehyde (resin Tackifier FF of Sample I) provided what is considered herein as satisfactory building tack for the moisture exposed uncured rubber surface.

Further, it can be seen from Table 6 that static and dynamic ozone resistance of the cured rubber surfaces were basically equivalent for both the tackifier resin based upon the vinyl monomer modified resin product of t-butyl phenol/formaldehyde and the tackifier resin product of t-butyl phenol/formaldehyde.

## Claims

1. An uncured rubber composition which comprises, based on 100 parts by weight rubber (phr):
(A) at least one (100 phr) diene-based elastomer,
(B) from 20 to 120 phr of a particulate rubber reinforcement comprising 10 phr to 80 phr of carbon black and 10 phr to 60 phr of silica;
wherein the uncured rubber composition contains a dispersion of greater than 3 phr of a resin comprising:
(a) a vinyl monomer modified reaction product of t-butyl phenol and formaldehyde in the absence of sorbitan monostearate, or
(b) a reaction product of t-butyl phenol and formaldehyde in the absence of sorbitan monostearate;
and wherein at least one surface of the uncured rubber composition contains a combination of the silica and the resin and has a moisture aged tack of at least 5 Newtons.

2. The uncured rubber composition of claim 1 comprising a silica coupler for the silica having a moiety reactive with hydroxyl groups contained on the silica and another different moiety interactive with the diene based elastomer(s).

3. The uncured rubber composition of at least one of the previous claims comprising from 4 to 8 phr of the resin.

4. The uncured rubber composition of at least one of the previous claims wherein said the resin is the product of t-butyl phenol and formaldehyde without vinyl monomer modification.

5. The uncured rubber composition of at least one of the previous claims wherein the vinyl monomer for the vinyl monomer modified product of t-butyl phenol and formaldehyde comprises at least one of styrene, alphamethylstyrene, chlorostyrene, N,N-dimethylaminostyrene, aminostyrene, hydroxystrene, t-butylstyrene, carboxystyrene, divinylbenzene, vinylnaphthalene, vinyl pyridine, and mixtures thereof.

6. The uncured rubber composition of at least one of the previous claims wherein the vinyl modification of the vinyl monomer modified product of t-butyl phenol and formaldehyde is by acid catalysis.

7. A method of shaping an uncured rubber composition, the method comprising:
(A) extruding or calendering the uncured rubber composition to thereby shape the uncured rubber composition and to cause the temperature of the rubber composition to increase to an elevated temperature; and
(B) treating the extruded or calendered uncured shaped rubber composition at the elevated temperature with moisture to thereby cool the rubber composition;
wherein the uncured rubber composition comprises at least one (100 phr) diene-based elastomer, 10 phr to 80 phr of rubber reinforcing carbon black, 10 phr to 60 phr of silica and a dispersion of greater than 3 phr of a resin, and wherein the resin is a reaction product of t-butyl phenol and formaldehyde in the absence of sorbitan monosterarate or a vinyl modified reaction product of t-butyl phenol and formaldehyde in the absence of sorbitan monosterarate;
wherein the uncured rubber composition composition is exposed to moisture during the shaping thereof in its uncured state, following which the moisture exposed surface is dried and a portion of the moisture is retained by the silica; and
wherein at least one surface of the uncured rubber composition contains a combination of the silica and the resin and has a moisture aged tack of at least 5 Newtons.

8. The method of claim 7 wherein the resin is the product of t-butyl phenol and formaldehyde without vinyl monomer modification.

9. A sulfur cured shaped rubber composition being the product of a sulfur curing and shaping of the uncured rubber composition of at least one of the claims 1 to 6.

10. A shaped tire component comprising the product of a sulfur curing and shaping of the uncured rubber composition of at least one of the claims 1 to 6.

11. The tire component of claim 10 wherein the component is a tire sidewall.

## Patentansprüche

1. Unvulkanisierte Kautschukzusammensetzung, welche, auf Basis von 100 Gewichtsteilen Kautschuk (ThK), umfasst:
(A) mindestens ein (100 ThK) dienbasiertes Elastomer,
(B) 20 bis 120 ThK einer partikelförmigen Kautschukverstärkung, umfassend 10 ThK bis 80 ThK Carbon Black und 10 ThK bis 60 ThK Silika;
wobei die unvulkanisierte Kautschukzusammensetzung eine Dispersion von mehr als 3 ThK eines Harzes enthält, umfassend:
(a) ein vinylmonomermodifiziertes Reaktionsprodukt von t-Butylphenol und Formaldehyd in Abwesenheit von Sorbitanmonostearat, oder
(b) ein Reaktionsprodukt von t-Butylphenol und Formaldehyd in Abwesenheit von Sorbitanmonostearat;
und wobei mindestens eine Oberfläche der unvulkanisierten Kautschukzusammensetzung eine Kombination des Silikas und des Harzes umfasst und eine feuchtigkeitsgealterte Klebkraft von mindestens 5 Newton aufweist.

2. Unvulkanisierte Kautschukzusammensetzung nach Anspruch 1, umfassend ein Silikahaftmittel für das Silika, das einen Anteil, der mit an dem Silika enthaltenen Hydroxylgruppen reaktiv ist, und einen anderen, unterschiedlichen Anteil, der mit dem bzw. den dienbasierten Elastomer(en) in Wechselwirkung tritt, aufweist.

3. Unvulkanisierte Kautschukzusammensetzung nach mindestens einem der vorgenannten Ansprüche, welche 4 bis 8 ThK des Harzes enthält.

4. Unvulkanisierte Kautschukzusammensetzung nach mindestens einem der vorgenannten Ansprüche, wobei das besagte Harz das Produkt von t-Butylphenol und Formaldehyd ohne Vinylmonomermodifikation ist.

5. Unvulkanisierte Kautschukzusammensetzung nach mindestens einem der vorgenannten Ansprüche, wobei das Vinylmonomer für das vinylmonomermodifizierte Produkt von t-Butylphenol und Formaldehyd mindestens eines von Styrol, Alpha-Methylstyrol, Chlorstyrol, N,N-Dimethylaminostyrol, Aminostyrol, Hydroxystyrol, t-Butylstyrol, Carboxystyrol, Divinylbenzol, Vinylnaphthalen, Vinylpyridin und Mischungen davon umfasst.

6. Unvulkanisierte Kautschukzusammensetzung nach mindestens einem der vorgenannten Ansprüche, wobei die Vinylmodifikation des vinylmonomermodifizierten Produkts von t-Butylphenol und Formaldehyd durch Säurekatalyse stattfindet.

7. Verfahren zum Formen einer unvulkanisierten Kautschukzusammensetzung, wobei das Verfahren umfasst:
(A) Extrudieren oder Kalandern der unvulkanisierten Kautschukzusammensetzung, um **dadurch** die unvulkanisierte Kautschukzusammensetzung zu formen und zu veranlassen, dass die Temperatur der Kautschukzusammensetzung auf eine erhöhte Temperatur ansteigt; und
(B) Behandeln der extrudierten oder kalanderten unvulkanisierten geformten Kautschukzusammensetzung auf der erhöhten Temperatur mit Feuchtigkeit, um die Kautschukzusammensetzung **dadurch** zu kühlen; wobei die unvulkanisierte Kautschukzusammensetzung mindestens ein (100 ThK) dienbasiertes Elastomer, 10 ThK bis 80 ThK Kautschukverstärkungs-Carbon Black, 10 ThK bis 60 ThK Silika und eine Dispersion von mehr als 3 ThK eines Harzes umfasst, und wobei das Harz ein Reaktionsprodukt von t-Butylphenol und Formaldehyd in Abwesenheit von Sorbitanmonostearat oder ein vinylmodifiziertes Reaktionsprodukt von t-Butylphenol und Formaldehyd in Abwesenheit von Sorbitanmonostearat ist;
wobei die unvulkanisierte Kautschukzusammensetzung während deren Formen in ihrem unvulkanisierten Zustand Feuchtigkeit ausgesetzt wird, wonach die der Feuchtigkeit ausgesetzte Oberfläche getrocknet wird und ein Teil der Feuchtigkeit von dem Silika zurückgehalten wird; und
wobei mindestens eine Oberfläche der unvulkanisierten Kautschukzusammensetzung eine Kombination des Silikas und des Harzes enthält und eine feuchtigkeitsgealterte Klebkraft von mindestens 5 Newton aufweist.

8. Verfahren nach Anspruch 7, wobei das Harz das Produkt von t-Butylphenol und Formaldehyd ohne Vinylmonomermodifikation ist.

9. Schwefelvulkanisierte geformte Kautschukzusammensetzung, welche das Produkt eines Schwefelvulkanisierens und Formens der unvulkanisierten Kautschukzusammensetzung nach mindestens einem der Ansprüche 1 bis 6 ist.

10. Geformtes Reifenbauteil, umfassend das Produkt eines Schwefelvulkanisierens und Formens der unvulkanisierten Kautschukzusammensetzung nach mindestens einem der Ansprüche 1 bis 6.

11. Reifenbauteil nach Anspruch 10, wobei das Bauteil eine Reifenseitenwand ist.

## Revendications

1. Composition de caoutchouc non vulcanisé qui comprend, basées sur 100 parties en poids de caoutchouc (phr) :
(A) au moins un élastomère (à concurrence de 100 phr) à base diénique ;
(B) à concurrence de 20 à 120 phr, un renforcement particulaire du caoutchouc comprenant du noir de carbone à concurrence de 10 phr à 80 phr et de la silice à concurrence de 10 phr à 60 phr ;
la composition de caoutchouc non vulcanisé contenant une dispersion, à concurrence de plus de 3 phr, d'une résine comprenant :
(a) un produit réactionnel, modifié par un monomère vinylique, de tert-butylphénol et de formaldéhyde en l'absence de monostéarate de sorbitanne ; ou
(b) un produit réactionnel de tert-butylphénol et de formaldéhyde en l'absence de monostéarate de sorbitanne ;
et dans laquelle au moins une surface de la composition de caoutchouc non vulcanisé contient une combinaison de silice et de résine, et possède une pégosité vieillie par l'humidité d'au moins 5 Newtons.

2. Composition de caoutchouc non vulcanisé selon la revendication 1, comprenant un coupleur de silice pour la silice possédant une fraction apte à réagir avec des groupes hydroxyle contenus sur la silice et une autre fraction différente qui entre en interaction avec le/les élastomères à base diénique.

3. Composition de caoutchouc non vulcanisé selon au moins une des revendications précédentes, comprenant la résine à concurrence de 4 à 8 phr.

4. Composition de caoutchouc non vulcanisé selon au moins une des revendications précédentes, dans laquelle la résine est le produit de tert-butylphénol et de formaldéhyde en l'absence d'une modification sur base d'un monomère vinylique.

5. Composition de caoutchouc non vulcanisé selon au moins une des revendications précédentes, dans laquelle le monomère vinylique pour le produit, modifié par un monomère vinylique, du tert-butylphénol et du formaldéhyde comprend au moins un membre du groupe comprenant le styrène, l'alpha-méthylstyrène, le chlorostyrène, le N,N-diméthylaminostyrène, l'aminostyrène, l'hydroxystyrène, le tert-butylstyrène, le carboxystyrène, le divinylbenzène, le vinylnaphtalène, la vinylpyridine, ainsi que leurs mélanges.

6. Composition de caoutchouc non vulcanisé selon au moins une des revendications précédentes, dans laquelle la modification vinylique du produit, modifié par un monomère vinylique, du tert-butylphénol et du formaldéhyde a lieu par catalyse acide.

7. Procédé de façonnement d'une composition de caoutchouc non vulcanisé, le procédé comprenant le fait de :
(A) extruder ou calandrer la composition de caoutchouc non vulcanisé pour ainsi façonner la composition de caoutchouc non vulcanisé et pour amener à température de la composition de caoutchouc à une température élevée ; et
(B) traiter la composition façonnée de caoutchouc non vulcanisé, qui a été extrudée ou calandrée à la température élevée, avec de l'humidité pour ainsi refroidir la composition de caoutchouc ;
dans lequel la composition de caoutchouc non vulcanisé comprend au moins un élastomère (à concurrence de 100 phr) à base diénique, à concurrence de 20 à 120 phr, un renforcement particulaire du caoutchouc comprenant du noir de carbone à concurrence de 10 phr à 80 phr et de la silice à concurrence de 10 phr à 60 phr, et une dispersion, à concurrence de plus de 3 phr, d'une résine, et dans lequel la résine représente un produit réactionnel de tert-butylphénol et de formaldéhyde en l'absence de monostéarate de sorbitanne ou un produit réactionnel, modifié par un monomère vinylique, de tert-butylphénol et de formaldéhyde en l'absence de monostéarate de sorbitanne ;
dans lequel la composition de caoutchouc non vulcanisé est exposée à l'humidité lors de son façonnement dans son état non vulcanisé ; après quoi, la surface exposée à l'humidité est séchée et une portion de l'humidité est retenue par la silice ; et
dans lequel au moins une surface de la composition de caoutchouc non vulcanisé contient une combinaison de la silice et de la résine et possède une pégosité vieillie par l'humidité d'au moins 5 Newtons.

8. Procédé selon la revendication 7, dans lequel la résine représente un produit réactionnel de tert-butylphénol et de formaldéhyde en l'absence d'une modification par un monomère vinylique.

9. Composition de caoutchouc façonnée vulcanisée au soufre, à savoir le produit d'une vulcanisation au soufre et d'un façonnement de la composition de caoutchouc non vulcanisé selon au moins une des revendications 1 à 6.

10. Composant de bandage pneumatique façonné comprenant le produit d'une vulcanisation au soufre et d'un façonnement de la composition de caoutchouc non vulcanisé selon au moins une des revendications 1 à 6.

11. Composant de bandage pneumatique selon la revendication 10, dans lequel le composant est un flanc de bandage pneumatique.
